# EUROPEAN PATENT SPECIFICATION

(11) **EP 2 824 285 B1**
(45) Date of publication and mention of the grant of the patent: **16.03.2016**
(21) Application number: 13176146.2
(22) Date of filing: 11.07.2013
(51) Int. Cl.: F01D 17/14, F02C 7/055, F02C 7/057, F02C 9/20

(54) **Gas turbine engine comprising an inlet flow control arrangement**
Gasturbine mit einem System zur Steuerung der angesaugten Luft
Turbine à gaz comprenant un système de contrôle du flux d'entrée

(43) Date of publication of application: 14.01.2015
(73) Proprietor: ALSTOM Technology Ltd, 5400 Baden (CH)
(72) Inventor: Reiter, Wilhelm, 79790 Kuessaberg (DE); Rofka, Stefan, 5415 Nussbaumen (CH); Hoevel, Michael, 5426 Lengnau (CH)
(74) Representative: Bernotti, Andrea

(56) References cited:
- EP-A1- 2 397 670
- EP-A2- 2 573 331
- US-A1- 2010 146 978
- US-B2- 7 562 532

## Description

### BACKGROUND

### Field of Endeavor

The present disclosure relates to a gas turbine engine, and, more particularly, to a gas turbine engine with improved efficiency and improved emission control of combustion products, such as Nitrogen Oxide gases (NOx), Carbon monoxide (CO), Carbon dioxide (CO₂), Unburned Hydrocarbons (UHC) etc., in exhaust gases, at low load condition.

### Brief Description of the Related Art

In recent times, with growing concern to protect environment, more and more industries are shifting towards renewable energy sources to produce power, which leads to a requirement for convention power plants to be competitive and to be able to operate at very low load and within constraints of a regulatory environment including limits on the emission of one or more combustion products such as Nitrogen Oxide gases (NOx), Carbon monoxide (CO), Carbon dioxide (CO₂), Unburned Hydrocarbons (UHC) etc., in exhaust gases.

Operating the power plant at low load condition and maintaining emission within the constraints of environment regulatory at the same time is a challenge. Various attempts in this regard have been taken previously, among such, one attempt include reducing inlet air flow by closing Variable Inlet Guide Vanes (VIGV) in the gas turbines or combined cycle power plants.

However, closing the VIGV for reducing the inlet air flow is possible to a certain extent only because after a certain limit the compressor on which the VIGV are configured begins to reach operation limits, and any further closing of the VIGV may lead to aerodynamically unstable operation or damage. Further, reduction of power for enabling the power plant to operate at low load condition may be done by reducing a turbine inlet temperature within the gas turbine. This, however, is constrained by operational limits of the specific combustor or becomes detrimental to the environment regulatory with regard to emission of one or more combustion products, as described above.

Accordingly, there exists a need for an improved gas turbine and operations.

EP 2573331 describes a compressor of a gas turbine system comprising a fluid flow control device and an impingement angle control device downstream of the fluid flow control device. EP 2397670 describes a method for controlling emissions in a heat engine, particularly in a gas turbine, and also describes a heat engine. '670 includes a description of a compressor with an orientable inlet guide vane stage.

### SUMMARY

The present disclosure describes an improved gas turbine engine, that will be presented in the following simplified summary to provide a basic understanding of one or more aspects of the disclosure that are intended to overcome the discussed drawbacks, but to include all advantages thereof, along with providing some additional advantages. This summary is not an extensive overview of the disclosure. It is intended to neither identify key or critical elements of the disclosure, nor to delineate the scope of the present disclosure. Rather, the sole purpose of this summary is to present some concepts of the disclosure, its aspects and advantages in a simplified form as a prelude to the more detailed description that is presented hereinafter.

An object of the present disclosure is to describe an improved gas turbine engine, which may be adaptable in terms of being modified for being operable at low load condition and within constraints of a regulatory environment on emission of one or more combustion products such as Nitrogen Oxide gases (NOx), Carbon monoxide (CO), Carbon dioxide (CO₂), Unburned Hydrocarbons (UHC) etc., in exhaust gases. Another object of the present disclosure is to describe an improved gas turbine, which is convenient to use in an effective and economical way. Various other objects and features of the present disclosure will be apparent from the following detailed description and claims.

The above noted and other objects, in one aspect, may be achieved by an improved gas turbine engine of a power plant. The gas turbine engine includes inlet and exhaust passages. The inlet passage is adapted to receive and direct inlet air to a compressor to compress and supply the inlet air to a combustor to produce gas to drive a turbine. Further, the exhaust passage is adapted to release exhaust gas from the turbine. The gas turbine engine further includes a filter member, at least a row of Variable Inlet Guide Vanes (VIGV) and an inlet air flow control arrangement. The filter member is disposed in the inlet passage to filter the inlet air. The VIGV is adapted to be configured on the compressor. Furthermore, the inlet air flow control arrangement is adapted to be detachably disposed at least between the filter member and the row of VIGV, and adjacent to the filter member. The detachable attachment enables removing of the inlet air flow control arrangement, whenever not required. The at least one of the VIGV and the air inlet flow control arrangement are configured to be selectively operable and controllable, upon requirement, to at least partially close the inlet passage to modulate and create predetermined required pressure loss in the inlet passage in order to supply reduced amount of the inlet air to the compressor to enable the reduction of power output of the gas turbine engine preferably at part load or at low load condition. The gas turbine engine further includes an exhaust gases air flow control arrangement adapted to be disposed in the exhaust passage to increase pressure and temperature of the exhaust gas exiting from the turbine.

In one embodiment of the present disclosure, the gas turbine engine may further include a heating member adapted to be configured in the inlet passage to heat the inlet air to enable, in combination with the pressure loss in the inlet passage, the reduction of power output of the gas turbine engine to obtain the low load condition.

In one embodiment of the present disclosure, the inlet air flow control arrangement, either independently or in combination with the heating member, under the low load condition of the gas turbine engine, enables reduction of emission of combustion products with the exhaust gas from the exhaust passage.

In one embodiment of the present disclosure, the inlet air flow control arrangement is adapted to be configured to maintain the direction of flow of inlet air such downstream of the VIGV receives axial inflow. In another embodiment of the present disclose, the inlet air flow control arrangement is adapted to be configured to change the direction of flow of the inlet air such that incidence of the inlet air at the VIGV leading edge is reduced in order to provide favorable flow conditions at the compressor inlet.

In one embodiment of the present disclosure, the gas turbine engine may include a control system adapted and configured to control the inlet air flow control arrangement.

In one example form, in combined cycle power plants having the gas turbine engine and Heat Recovery Steam Generator (HRSG), the exhaust gases flow control arrangement is adapted to be detachably disposed in the exhaust passage, downstream of the HRSG. The detachable attachment enables removing of the exhaust gases flow control arrangement, whenever not required.

These together with the other aspects of the present disclosure, along with the various features of novelty that characterize the present disclosure, are pointed out with particularity in the present disclosure. For a better understanding of the present disclosure, its operating advantages, and its uses, reference should be made to the accompanying drawings and descriptive matter in which there are illustrated exemplary embodiments of the present disclosure.

### BRIEF DESCRIPTION OF THE DRAWINGS

The advantages and features of the present disclosure will be better understood with reference to the following detailed description and claims taken in conjunction with the accompanying drawing, wherein like elements are identified with like symbols, and in which:
FIG. 1 illustrates an example block diagram of a gas turbine engine, in accordance with an exemplary embodiment of the present disclosure; and
FIG. 2 illustrates an example gas turbine engine portion depicting variable positions of an inlet air flow control arrangement, in accordance with an exemplary embodiment of the present disclosure.
Like reference numerals refer to like parts throughout the description of several views of the drawings.

### DETAILED DESCRIPTION OF THE PRESENT DISCLOSURE

For a thorough understanding of the present disclosure, reference is to be made to the following detailed description, including the appended claims, in connection with the above described drawings. In the following description, for purposes of explanation, numerous specific details are set forth in order to provide a thorough understanding of the present disclosure. It will be apparent, however, to one skilled in the art that the present disclosure can be practiced without these specific details. In other instances, structures and apparatuses are shown in block diagrams form only, in order to avoid obscuring the disclosure. Reference in this specification to "one embodiment," "an embodiment," "another embodiment," "various embodiments," means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but may not be of other embodiment's requirement.

Although the following description contains many specifics for the purposes of illustration, anyone skilled in the art will appreciate that many variations and/or alterations to these details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure. Further, the relative terms, such as "first," "second," "third" and the like, herein do not denote any order, elevation or importance, but rather are used to distinguish one element from another. Further, the terms "a" and "an" herein do not denote a limitation of quantity, but rather denote the presence of at least one of the referenced item.

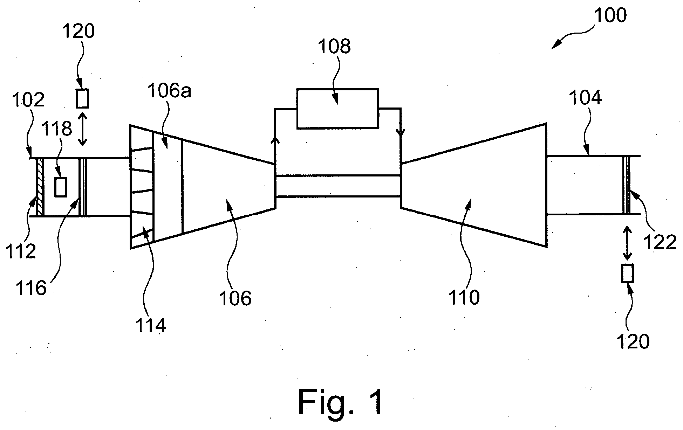

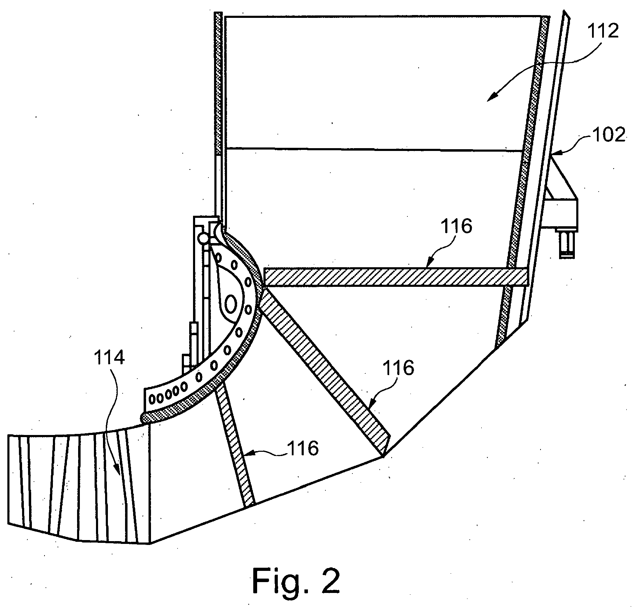

Referring now to FIGS. 1 and 2, examples of an improved gas turbine engine 100, are illustrated in accordance with an exemplary embodiment of the present disclosure. FIG. 1 illustrates an example block diagram whereas FIG. 2 illustrates an example component view of a portion of the gas turbine engine 100. In as much as the construction and arrangement of the gas turbine engine 100, various associated elements may be well-known to those skilled in the art, it is not deemed necessary for purposes of acquiring an understanding of the present disclosure that there be recited herein all of the constructional details and explanation thereof. Rather, it is deemed sufficient to simply note that as shown in FIGS. 1 and 2, in the gas turbine engine 100, only those components are shown that are relevant for the description of various embodiments of the present disclosure.

As shown in FIG. 1, a block diagram of the gas turbine engine 100 includes inlet and exhaust passages 102, 104. The inlet passage 102 is adapted to receive inlet air from the atmosphere or any other suitable source. The inlet passage 102 includes a filter member 112 disposed therewithin to filter inlet air to provide protection against the effects of contaminated inlet air. Different types of contaminants in the inlet air from the varying environments can cause several types of problems that negatively impact the reliability, availability, and time between overhauls of the gas turbine engine's 100 internal components. Foremost purpose of the filter member 112 is to clean the inlet air to meet the operational goals of the machine and, secondarily, to maintain its filtration efficiency. Specific designs of the filter member 112 may be adapted as per the requirement to protect against particles of various sizes and composition.

The gas turbine engine 100 further includes a compressor 106, various rows of stator vanes 106a configured on the compressor, a combustor 108 and a turbine 110. The inlet air from the inlet passage 102 is directed to the compressor 106. The inlet air in the compressor 106 is compressed and supplied to the combustor 108 to produce gas. The gas from the combustor 108 is directed through the stator vanes 106a to drive the turbine 110. Further, the exhaust passage 104 is adapted to release exhaust gas from the turbine 110. The gas turbine engine 100 is adapted and configured to be operable at varying load conditions, i.e. at full-load condition and low-load or part-load condition.

For enabling such operation conditions, the gas turbine engine 100 includes at least a row of Variable Inlet Guide Vanes (VIGV) 114 and an inlet air flow control arrangement 116. The VIGV 114 and the inlet air flow control arrangement 116 are adapted to control the inlet air flow and quantity that is required to be directed into the compressor 106 for combustion purpose depending upon requirement of gas turbine engine 100 operations, i.e. low-load condition or full-load condition. The at least one row of VIGV 114 is adapted to be configured on the compressor 106 before the various rows of stator vanes 106a.

In one embodiment of the present disclosure, the inlet air flow control arrangement 116 is adapted to be detachably disposed between the filter member 112 and the row of VIGV 114at any suitable location. In another embodiment of the present disclosure, the inlet air flow control arrangement 116 is adapted to be detachably disposed adjacent to the filter member 112. The detachable attachment enables removing of the inlet air flow control arrangement 116, whenever not required at the disclosed positions.

In an example FIG. 2, the inlet air flow control arrangement 116 is shown to be disposed at three different locations between the filter member 112 and the row of VIGV 114 that may be selected by the user as per system requirement. At a first location, the inlet air flow control arrangement 116 is shown to be disposed between the filter member 112 and the row of VIGV 114 with proximity to the filter member 112 and reasonably distal from the row of VIGV 114. At a second location, the inlet air flow control arrangement 116 is shown to be disposed between the filter member 112 and the row of VIGV 114 at substantially centralized position to both. At third location, the inlet air flow control arrangement 116 is shown to be disposed between the filter member 112 and the row of VIGV 114 with proximity to the row of VIGV 114 and reasonably distal from the filter member 112. However, without departing from the scope of the present disclosure, the inlet air flow control arrangement 116 may be disposed at any preferred locations between the filter member 112 and the row of VIGV 114 depending upon the gas turbine engine 100 operating conditions, apart from the disclosed ones. Further, as per the another embodiment, not as such shown in figures, the inlet air flow control arrangement 116 may be detachably disposed adjacent to the filter member 112 at any preferred locations depending upon the gas turbine engine 100 operating conditions. For example, the placement of the inlet air flow control arrangement 116 may be at front side of the filter member 112, or may be behind/ backside of the filter member 112, within the inlet passage 102.

The gas turbine engine 100, while operating at the low-load condition, the at least one of the VIGV 114 and the air inlet flow control arrangement 116 are configured to be selectively operable to at least partially close the inlet passage 102. That is, the VIGV 114 and the air inlet flow control arrangement 116 may be combinedly or separately operated to close the inlet passage 102 to substantially full extent. This enables modulation of the pressure loss to reach at a predetermined level in the inlet passage 102 and reduces the amount of inlet air supply to the compressor 106 to enable the reduction of power output of the gas turbine engine 100 at the low load condition. The predetermined level of the pressure loss may be selected upon the power output requirement at any particular time level during operation of power plants. Normally, in conventional gas turbine engines as found nowadays, intake passage and other elements disposed therein generally create pressure loss, which are not required but can't be avoided. However, the present disclosure utilizes means of maximizing the intake pressure loss intentionally, and the amount of such pressure loss may be fully controllable as per the requirement of the gas turbine engine 100 and working thereof in the low load condition. Such means in one embodiment is the air inlet flow control arrangement 116, which may be fully controllable selectively operable, upon requirement, to close the inlet passage 102 up to a level at which required pressure loss may be obtained.

Further, when required to operate the gas turbine engine 100 at full load condition, the air inlet flow control arrangement 116 may be removed from the inlet passage 102, and the at least one of the VIGV 114 may be opened to maximum to decrease the pressure loss and supply sufficiently higher amount of the inlet air to the compressor 106 to enable the increase in power output of the gas turbine engine 100.

In one embodiment of the present disclosure, the inlet air flow control arrangement 116 may be adapted to maintain the direction of flow of the inlet air such that downstream of the VIGV 114 receives axial inflow. In other words, the direction of flow of the inlet air remains unchanged with the insertion of the inlet air flow control arrangement 116 in the inlet passage 102. Further, in another embodiment, upon requirement, the inlet air flow control arrangement 116 may be adapted to change the direction of flow of the inlet air such that incidence of the inlet air at the VIGV 114 leading edge is reduced.

The gas turbine engine 100 may further include a heating member 118 adapted to be configured in the inlet passage 102. In FIG. 1, the heating member 118 is shown to be disposed between the filter member 112 and the inlet air flow control arrangement 116. However, without departing from the scope of the present disclosure, the heating member 118 may be disposed at any location which is capable of heating the inlet air entering the compressor 106. The heating member 118 may be adapted to be operable during the low load operation condition of the gas turbine engine 100. Specifically, during the low load operation condition, when it is required to heat the inlet air to enable the reduction of power output of the gas turbine engine 100, the heating member 118 in combination with the air inlet flow control arrangement 116 manage the pressure loss in the inlet passage 102. The inlet air flow control arrangement 116, in combination with the heating member 118, is capable of reducing intake pressure by increasing the inlet pressure loss in turn reducing intake mass flow of inlet air while maintaining the volume of the mass flow of the intake air without affecting the combustor 108 or its chamber's operating conditions. Further, the inlet air flow control arrangement 116, either independently or in combination with the heating member 118, under the low load condition of the gas turbine engine 100, also enables reduction of emission of combustion products with the exhaust gas from the exhaust passage 104, apart from supply low quantity of the inlet air.

In one additional embodiment of the present disclosure, the gas turbine engine 100 may include an exhaust gases flow control arrangement 122. Such exhaust gases flow control arrangement 122 may be adapted to be detachably disposed in the exhaust passage 104 so that when required may be removed. Such exhaust gases flow control arrangement 122 may be adapted to increase pressure and temperature of the exhausted gas exiting from the turbine 110. Specifically, such additional placement of the exhaust gases flow control arrangement 122, apart from that of the inlet air flow control arrangement 116, may be effective in a combined cycle power plants, where the gas turbine engine 100 may have been combined with other power plants, such as a steam/water cycle power plants. In such combined power plants, which may also include a Heat Recovery Steam Generator (HRSG), the exhaust gases flow control arrangement 122 may be adapted to be detachably disposed in the exhaust passage 104, downstream of the HRSG. This ensures the increase in pressure and temperature of the exhausted gas exiting from the turbine 110 for enabling such other power plant to utilize the exhausted gas for being operated. In other words, with such addition of the exhaust gases flow control arrangement 122 in the gas turbine engine 100 and keeping the turbine inlet temperature or power constant, the gas turbine exhaust temperature may be increased, which is in favor when the gas turbine engine 100 is utilized with combined cycle power plant. Additionally, this is also a favorable condition when a fast power ramp-up rate is required in such combined cycle.

In one embodiment of the present disclosure, the inlet air and exhaust gases flow control arrangements 116 and 122 may be one of a shutter arrangement, a grid arrangement, a damper arrangement and a throttle device arrangement selectively chosen per requirement. However, without departing from the scope of the present disclosure, the inlet air and exhaust gases flow control arrangements 116, 122 may be any suitable arrangements, which may perform the controlling inlet air and exhaust gases.

In one additional embodiment of the present disclosure, the gas turbine engine 100 may include a control system 120 adapted and configured to control the inlet air and exhaust gases flow control arrangements 116, 120.

The improved gas turbine engine of the present disclosure is advantageous in various scopes. The improved gas turbine engine of the disclosure are adaptable in terms reducing intake pressure in turn reducing intake mass flow of inlet air while maintaining the volume flow of the intake air without affecting the combustor or combustion chamber operating conditions. The improved gas turbine engine enables reduction of turbine power by lowering the mass flow of the inlet air by utilizing suitable arrangement for achieving low load condition. Further, the improved gas turbine engine is improved in efficiency, and is improved in emission control of combustion products, such as Nitrogen Oxide gases (NOx), Carbon monoxide (CO), Carbon dioxide (CO₂), Unburned Hydrocarbons (UHC) etc., in exhaust gases, at low load condition. Such improved gas turbine engine also enables turbine pressure ratios to be lower than compressor ratio. Further, the improved gas turbine engine is also effect with combined power cycles, where by keeping the turbine inlet temperature constant or keeping the power constant, the gas turbine exhaust temperature will increase which is in favor for other combined cycle power plant, such as water/steam cycles, when a fast power ramp-up rate is required in such combined cycle power plants. Further, the improved gas turbine engine are convenient to use and economical. Various other advantages and features of the present disclosure are apparent from the above detailed description and appendage claims.

The foregoing descriptions of specific embodiments of the present disclosure have been presented for purposes of illustration and description. They are not intended to be exhaustive or to limit the present disclosure to the precise forms disclosed, and obviously many modifications and variations are possible in light of the above teaching. The embodiments were chosen and described in order to best explain the principles of the present disclosure and its practical application, to thereby enable others skilled in the art to best utilize the present disclosure and various embodiments with various modifications as are suited to the particular use contemplated.

### Reference Numeral List

- 100: Gas turbine engine
- 102: Inlet passages
- 104: Exhaust passage
- 106: Compressor
- 106a: Stator vanes
- 108: Combustor
- 110: Turbine
- 112: Filter member
- 114: Variable Inlet Guide Vanes (VIGV)
- 116: Inlet air flow control arrangement
- 118: Heating member
- 120: Control system
- 122: Exhaust gases flow control arrangement

## Claims

1. A gas turbine engine 100 of a gas power plant, the gas turbine engine 100 comprising:
inlet and exhaust passages 102, 104, the inlet passage 102 adapted to receive and direct inlet air to a compressor 106 to compress and supply the inlet air to a combustor 108 to produce gas to drive a turbine 110, and the exhaust passage 104 adapted to release exhaust gas from the turbine 110;
a filter member 112 disposed in the inlet passage 102 to filter the inlet air;
at least a row of Variable Inlet Guide Vanes (VIGV) 114 adapted to be configured on the compressor 106; and
an inlet air flow control arrangement 116 adapted to be detachably disposed at least:
between the filter member 112 and the row of VIGV 114, and
adjacent the filter member 112,
wherein at least one of the VIGV 114 and the air inlet flow control arrangement 116 are configured to be selectively operable and controllable, upon requirement, to at least partially close the inlet passage 102 to modulate and create predetermined required pressure loss in the inlet passage 102 in order to supply reduced amount of the inlet air to the compressor 106 to enable the reduction of power output of the gas turbine engine 100 at a low load condition, and **characterized in that** the gas turbine engine further comprises
an exhaust gases flow control arrangement 122 adapted to be disposed in the exhaust passage 104 to increase pressure and temperature of the exhaust gas exiting from the turbine 110.

2. The gas turbine engine 100 as claimed in claim 1, further comprising a heating member 118 adapted to be configured in the inlet passage 102 to heat the inlet air to enable, in combination of pressure loss in the inlet passage 102, the reduction of power output of the gas turbine engine 100 at the low load condition.

3. The gas turbine engine 100 as claimed in claim 2, wherein the inlet air flow control arrangement 116, either independently or in combination with the heating member 118, under the low load condition of the gas turbine engine 100, enable reduction of emission of combustion products with the exhaust gas from the exhaust passage 104.

4. The gas turbine engine 100 as claimed in claim 1, wherein the inlet air flow control arrangement 116 is adapted to be configured to maintain the direction of flow of the inlet air such downstream of the VIGV 114 receives axial inflow.

5. The gas turbine engine 100 as claimed in claim 1, wherein the inlet air flow control arrangement 116 is adapted to be configured to change the direction of flow of the inlet air such that incident of the inlet air at the VIGV 114 leading edge is reduced.

6. The gas turbine engine 100 as claimed in claim 1, wherein the inlet air flow control arrangement 116 is one of a shutter arrangement, a grid arrangement, a damper arrangement and a throttle device arrangement.

7. The gas turbine engine 100 as claimed in claim 1, further comprising a control system 120 adapted and configured to control the inlet air flow control arrangement 116.

8. The gas turbine engine 100 as claimed in claim 1, wherein the exhaust gases flow control arrangement 122 is adapted to be detachably disposed in the exhaust passage 104 to increase pressure and temperature of the exhaust gas exiting from the turbine 110.

9. The gas turbine engine 100 as claimed in claim 8, further comprising a control system 120 adapted and configured to control the exhaust gases flow control arrangement 122.

10. The gas turbine engine 100 of the gas power plant as claimed in claim 8 with a Heat Recovery Steam Generator (HRSG), wherein the exhaust gases flow control arrangement 122 is adapted to be detachably disposed in the exhaust passage 104, downstream of the HRSG to increase pressure and temperature of the exhaust gas exiting from the turbine 110.

11. The gas turbine engine 100 as claimed in claim 1, wherein the exhaust gases flow control arrangement 122 is one of a shutter arrangement, a grid arrangement, a damper arrangement and a throttle device arrangement.

## Patentansprüche

1. Gasturbine 100 eines Gaskraftwerks, wobei die Gasturbine 100 umfasst:
Einlass- und Auslasskanäle 102, 104, wobei der Einlasskanal 102 zum Aufnehmen und Leiten von Einlassluft zu einem Verdichter 106 zum Verdichten und Zuführen der Einlassluft zu einem Verbrenner 108 zum Erzeugen von Gas zum Antreiben einer Turbine 110 ausgelegt ist, und der Auslasskanal 104 zum Abgeben von Abgas aus der Turbine 110 ausgelegt ist;
ein Filterelement 112, das in dem Einlasskanal 102 zum Filtern der Einlassluft angeordnet ist;
mindestens eine Reihe verstellbarer Einlassleitschaufeln (VIGV) 114 die zur Konfiguration an dem Verdichter 106 ausgelegt sind; und
eine Einlassluftströmungs-Steueranordnung 116, die zum lösbaren Anordnen mindestens zwischen dem Filterelement 112 und der Reihe von VIGV 114 und benachbart zum Filterelement 112 ausgelegt ist,
wobei mindestens eine der VIGV 114 und die Lufteinlass-Strömungssteueranordnung 116 so konfiguriert sind, um bei Bedarf selektiv betrieben und gesteuert werden zu können, um mindestens den Einlasskanal 102 teilweise zu schließen, um einen vorbestimmten erforderlichen Druckverlust im Einlasskanal 102 zu modulieren und zu schaffen, um eine reduzierte Menge von Einlassluft dem Verdichter 106 zuzuführen, um die Reduktion des Leistungsausgangs der Gasturbine 100 bei einer geringen Lastbedingung zu ermöglichen, und **dadurch gekennzeichnet, dass** die Gasturbine ferner umfasst:
eine Abgasströmungs-Steueranordnung 122, die zum Anordnen in dem Abgaskanal 104 zum Erhöhen des Drucks und der Temperatur des Abgases, das aus der Turbine 110 austritt, ausgelegt ist.

2. Gasturbine 100 nach Anspruch 1, ferner umfassend ein Heizelement 118, das zum Konfigurieren in dem Einlasskanal 102 zum Erwärmen der Einlassluft zum Ermöglichen, in Verbindung mit dem Druckverlust in dem Einlasskanal 102, der Reduktion des Leistungsausgangs der Gasturbine 100 in der Niederlastbedingung ausgelegt ist.

3. Gasturbine 100 nach Anspruch 2, wobei die Einlassluft-Strömungssteueranordnung 116, entweder unabhängig oder in Kombination mit dem Heizelement 118 unter der Niederlastbedingung der Gasturbine 100 die Reduktion der Emission von Verbrennungsprodukten mit dem Abgas aus dem Abgaskanal 104 ermöglicht.

4. Gasturbine 100 nach Anspruch 1, wobei die Einlassluft-Strömungssteueranordnung 116 zur Konfiguration zum Aufrechterhalten der Strömungsrichtung der Einlassluft ausgelegt ist, sodass stromabwärts der VIGV 114 ein axialer Einfluss aufgenommen wird.

5. Gasturbine 100 nach Anspruch 1, wobei die Einlassluft-Strömungssteueranordnung 116 zur Konfiguration zum Wechseln der Strömungsrichtung der Einlassluft ausgelegt ist, sodass ein Auftreffen der Einlassluft an der VIGV 114-Anströmkante verringert wird.

6. Gasturbine 100 nach Anspruch 1, wobei die Einlassluft-Strömungssteueranordnung 116 eine Verschlussanordnung, eine Gitteranordnung, eine Dämpferanordnung oder eine Drosselvorrichtungsanordnung ist.

7. Gasturbine 100 nach Anspruch 1, ferner umfassend ein Steuersystem 120, das zum Steuern der Einlassluftströmungs-Steueranordnung 116 ausgelegt und konfiguriert ist.

8. Gasturbine 100 nach Anspruch 1, wobei die Abgasströmungs-Steueranordnung 122 zum lösbaren Anordnen in dem Abgaskanal 104, um den Druck und die Temperatur des Abgases zu erhöhen, das aus der Turbine 110 austritt, ausgelegt ist.

9. Gasturbine 100 nach Anspruch 8, ferner umfassend ein Steuersystem 120, das zum Steuern der Abgasluftströmungs-Steueranordnung 122 ausgelegt und konfiguriert ist.

10. Gasturbine 100 des Gaskraftwerks nach Anspruch 8 mit einem Wärmerückgewinnungs-Dampfgenerator (HRSG), wobei die Abgasströmungs-Steueranordnung 122 zum lösbaren Anordnen in dem Abgaskanal 104 stromabwärts des HRSG zum Erhöhen des Drucks und der Temperatur des Abgases, das aus der Turbine 110 austritt, ausgelegt ist.

11. Gasturbine 100 nach Anspruch 1, wobei die Abgas-Strömungssteueranordnung 122 eine Verschlussanordnung, eine Gitteranordnung, eine Dämpferanordnung oder eine Drosselvorrichtungsanordnung ist.

## Revendications

1. Moteur à turbine à gaz 100 d'une centrale à gaz, le moteur à turbine à gaz 100 comprenant :
des passages d'admission et d'échappement 102, 104, le passage d'admission 102 étant conçu pour recevoir et diriger l'air d'admission vers un compresseur 106 afin de comprimer et d'acheminer l'air d'admission à une chambre de combustion 108 afin de produire du gaz pour entraîner une turbine 110, et le passage d'échappement 104 étant conçu pour rejeter le gaz d'échappement de la turbine 110 ;
un élément formant filtre 112 disposé dans le passage d'admission 102 afin de filtrer l'air d'admission;
au moins une rangée d'aubes directrices d'entrée orientables (VIGV) 114 pouvant être configurée sur le compresseur 106 ; et
un système de régulation d'écoulement d'air d'admission 116 conçu pour être disposé de façon détachable au moins :
entre l'élément formant filtre 112 et la rangée de VIGV 114, et
en position adjacente à l'élément formant filtre 112,
au moins une des VIGV 114 et le système de régulation d'écoulement d'air d'admission 116 étant configurés pour pouvoir être mis en fonctionnement et commandés de manière sélective, en cas de besoin, de façon à fermer au moins partiellement le passage d'admission 102 afin de moduler et de créer une perte de pression requise prédéterminée dans le passage d'admission 102 de manière à acheminer une quantité moindre d'air d'admission au compresseur 106 afin de permettre une réduction de puissance de sortie du moteur à turbine à gaz 100 dans des conditions de faible charge, et **caractérisé en ce que** le moteur à turbine à gaz comprend en outre un système de régulation d'écoulement de gaz d'échappement 122 conçu pour être disposé dans le passage d'échappement 104 afin d'augmenter la pression et la température du gaz d'échappement sortant de la turbine 110.

2. Moteur à turbine à gaz 100 selon la revendication 1, comprenant en outre un élément chauffant 118 pouvant être configuré dans le passage d'admission 102 afin de chauffer l' air d' admission de façon à permettre, en combinaison avec une perte de pression dans le passage d'admission 102, la réduction de la puissance de sortie du moteur à turbine à gaz 100 dans les conditions de faible charge.

3. Moteur à turbine à gaz 100 selon la revendication 2, dans lequel le système de régulation d'écoulement d'air d'admission 116, soit indépendamment soit en combinaison avec l'élément chauffant 118, dans les conditions de faible charge du moteur à turbine à gaz 100, permet une réduction des émissions de produits de combustion avec le gaz d'échappement par le passage d'échappement 104.

4. Moteur à turbine à gaz 100 selon la revendication 1, dans lequel le système de régulation d'écoulement d'air d'admission 116 peut être configuré afin de maintenir la direction d'écoulement de l'air d'admission de sorte que la partie en aval des VIGV 114 reçoive un écoulement entrant axial.

5. Moteur à turbine à gaz 100 selon la revendication 1, dans lequel le système de régulation d'écoulement d'air d'admission 116 peut être configuré pour changer la direction d'écoulement de l'air d'admission de telle sorte que l'incidence de l'air d'admission au niveau du bord d'attaque des VIGV 114 soit réduite.

6. Moteur à turbine à gaz 100 selon la revendication 1, dans lequel le système de régulation d'écoulement d'air d'admission 116 est un système à volets, un système à grilles, un système d'absorption ou un système à dispositif d'étranglement.

7. Moteur à turbine à gaz 100 selon la revendication 1, comprenant en outre un moyen de commande 120 conçu et configuré pour commander le système de régulation d'écoulement d'air d'admission 116.

8. Moteur à turbine à gaz 100 selon la revendication 1, dans lequel le système de régulation d'écoulement de gaz d'échappement 122 est conçu pour être disposé de manière détachable dans le passage d'échappement 104 afin d'augmenter la pression et la température du gaz d'échappement sortant de la turbine 110.

9. Moteur à turbine à gaz 100 selon la revendication 8, comprenant en outre un moyen de commande 120 conçu et configuré pour commander le système de régulation d'écoulement de gaz d'échappement 122.

10. Moteur à turbine à gaz 100 de la centrale à gaz selon la revendication 8 comportant un générateur de vapeur à récupération de chaleur (HRSG), dans lequel le système de régulation d'écoulement de gaz d'échappement 122 est conçu pour être disposé de manière détachable dans le passage d'échappement 104, en aval du HRSG afin d'augmenter la pression et la température du gaz d'échappement sortant de la turbine 110.

11. Moteur à turbine à gaz 100 selon la revendication 1, dans lequel le système de régulation d'écoulement de gaz d'échappement 122 est un système à volets, un système à grilles, un système d'absorption ou un système à dispositif d'étranglement.
